# EUROPEAN PATENT APPLICATION

(11) **EP 2 431 920 A2**
(43) Date of publication of application: **21.03.2012**
(21) Application number: 11181155.0
(22) Date of filing: 13.09.2011
(51) Int. Cl.: G06K 9/72, G06K 9/68

(54) **Character recognition apparatus, sorting apparatus, sorting control apparatus, and character recognition method**

(30) Priority: 16.09.2010 JP 2010208493; 16.09.2010 JP 2010208607; 02.09.2011 JP 2011191506
(71) Applicant: Kabushiki Kaisha Toshiba, Tokyo 105-8001 (JP)
(72) Inventor: Hamamura, Tomoyuki, Tokyo, 105-8001 (JP); Maeda, Masaya, Tokyo, 105-8001 (JP); Irie, Bunpei, Tokyo, 105-8001 (JP); Piao, Ying, Tokyo, 105-8001 (JP)
(74) Representative: Kramer - Barske - Schmidtchen

(57) **Abstract**

According to one embodiment, a character recognition apparatus includes a detection unit and a recognition unit. The detection unit (13) detects each character candidate from an image. The recognition unit (13) recognizes each character candidate based on a plurality of character recognition dictionaries corresponding to a plurality of degrees of different character chipping.

## Description

### FIELD

Embodiments described herein relate generally to a character recognition apparatus, a sorting apparatus, a sorting control apparatus, and a character recognition method.

### BACKGROUND

Character recognition apparatuses such as an OCR (optical character reader) that reads characters in an image are known.

A portion of characters constituting a destination address is sometimes positioned at one end of a window in a windowed letter and hidden so that some characters are missing. Various technologies to recognize such missing characters, not to be limited to the window of a letter, have been proposed.

For example, a technology to recognize characters by using an estimation result obtained by estimating the height of characters in a hidden line from the height of characters in a non-hidden line is proposed. Also, a technology to recognize characters by using an estimation result obtained by estimating the height of characters chipped when an underline is removed from the height of characters of a non-underlined line is proposed.

However, accuracy of character recognition of the above technologies is still inadequate and more accurate character recognition technology is desired.

### BRIEF DESCRIPTION OF THE DRAWINGS

FIG. 1 is a block diagram exemplifying a sorting system (character recognition apparatus) according to a first embodiment;
FIG. 2 is a block diagram showing a modification of the sorting system according to the first embodiment;
FIG. 3 is a flow chart exemplifying character recognition processing according to the first embodiment;
FIG. 4 is a diagram exemplifying a sorted object according to the first embodiment;
FIG. 5 is a diagram exemplifying detection of a character candidate according to the first embodiment;
FIG. 6 is a diagram exemplifying an estimation of a character lower end position according to the first embodiment;
FIG. 7 is a diagram exemplifying a selection of character recognition candidates according to the first embodiment;
FIG. 8 is a plan view exemplifying a windowed mail such as a windowed letter according to a second embodiment;
FIG. 9 is a block diagram schematically showing the configuration of a sorting apparatus to which a character recognition apparatus and a character recognition method according to the second embodiment are applied;
FIG. 10 is a flow chart illustrating the flow of the character recognition method according to the second embodiment;
FIG. 11 is a flow chart illustrating the flow of the character recognition method according to the second embodiment;
FIG. 12 is a diagram illustrating the windowed mail in which a portion of a character string is hidden by the window and how contours are tracked;
FIG. 13 is a diagram exemplifying an exclusive partial character table;
FIGS. 14A and 14B are diagrams illustrating an example of an exclusive partial character of characters used in English and an example of a non-exclusive partial character respectively; and
FIG. 15 is a diagram exemplifying a height estimation of a defective portion of a character string based on hyphen detection.

### DETAILED DESCRIPTION

In general, according to one embodiment, a character recognition apparatus includes a detection unit and a recognition unit. The detection unit detects each character candidate from an image. The recognition unit recognizes each character candidate based on a plurality of character recognition dictionaries corresponding to a plurality of degrees of different character chipping.

### (First embodiment)

The first embodiment will be described below with reference to the drawings.

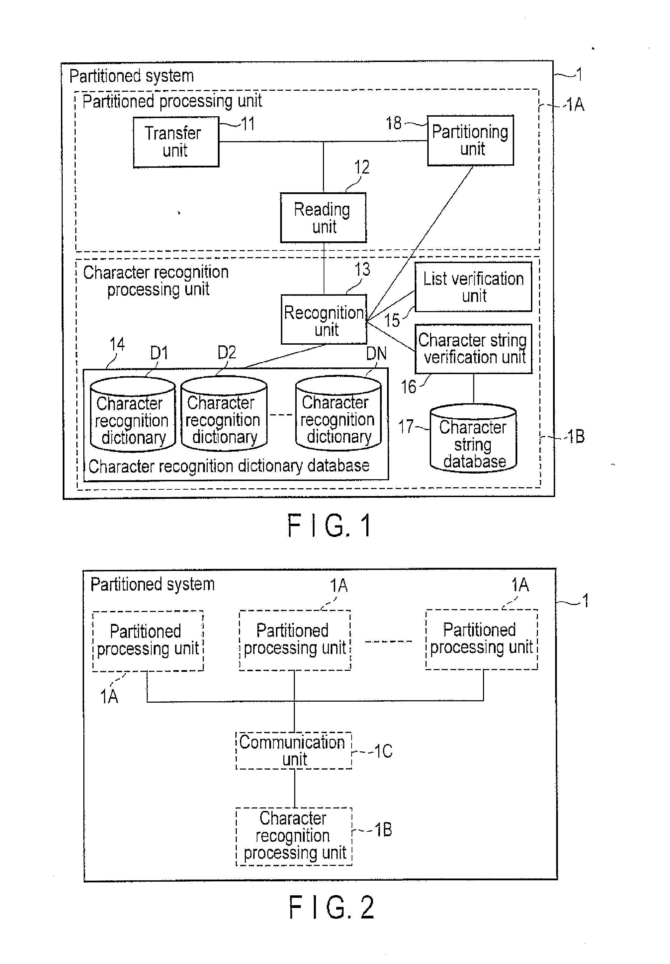

FIG. 1 is a block diagram exemplifying a sorting system according to the first embodiment.

As shown in FIG. 1, a sorting system 1 includes a transfer unit 11, a reading unit 12, a recognition unit 13, a character recognition dictionary database 14, an alignment verification unit 15, a character string verification unit 16, a character string database 17, and a sorting unit 18. A sorting processing unit (sorting apparatus) 1A is constituted of the transfer unit 11, the reading unit 12, and the sorting unit 18. A character recognition processing unit (character recognition apparatus) 1B is constituted of the recognition unit 13, the character recognition dictionary database 14, the alignment verification unit 15, the character string verification unit 16, and the character string database 17.

The sorting system 1 may also be constituted as shown in FIG. 2. That is, the sorting system 1 may be constituted of a plurality of units of the sorting processing unit 1A, one unit of the character recognition processing unit 1B, and a communication unit 1C. A sorting control processing unit (sorting control apparatus) 1D is constituted of one unit of the character recognition processing unit 1B and the communication unit 1C. The communication unit 1C sends information (image data of a sorted object) from the plurality of units of the sorting processing unit 1A to the character recognition processing unit 1B and also sends information (destination address information (sorting information) read and recognized from an image) from the character recognition processing unit 1B to the plurality of units of the sorting processing unit 1A. By constituting the sorting system 1 as shown in FIG. 2, sorting processing can be distributed and determination processing (recognition processing) can be centralized so that overall processing efficiency can be improved.

The transfer unit 11 is constituted of a transfer path or the like and a sorted object such as a letter and package is transferred along the transfer path. The reading unit 12 reads an image of the sorted object on the transfer path. For example, the sorted object is a windowed letter and a portion of the character string constituting the destination address is hidden at an end of the window.

The character recognition dictionary database 14 stores a plurality of character recognition dictionaries corresponding to a plurality of different degrees of character chipping. Further, the character recognition dictionary database 14 also stores a character recognition dictionary of complete characters without character chipping. For example, the character recognition dictionary database 14 stores N (N is a natural number) character recognition dictionaries D1, D2, ..., DN.

For example, the character recognition dictionary D1 (dictionary without character chipping) is a character recognition dictionary composed of a plurality of characters without character chipping. The character recognition dictionary D2 (dictionary of 10% character chipping) is a character recognition dictionary composed of a plurality of characters of 1% to 20% character chipping. The character recognition dictionary D3 (dictionary of 30% character chipping) is a character recognition dictionary composed of a plurality of characters of 21% to 40% character chipping. The character recognition dictionary D4 (dictionary of 50% character chipping) is a character recognition dictionary composed of a plurality of characters of 41% to 60% character chipping.

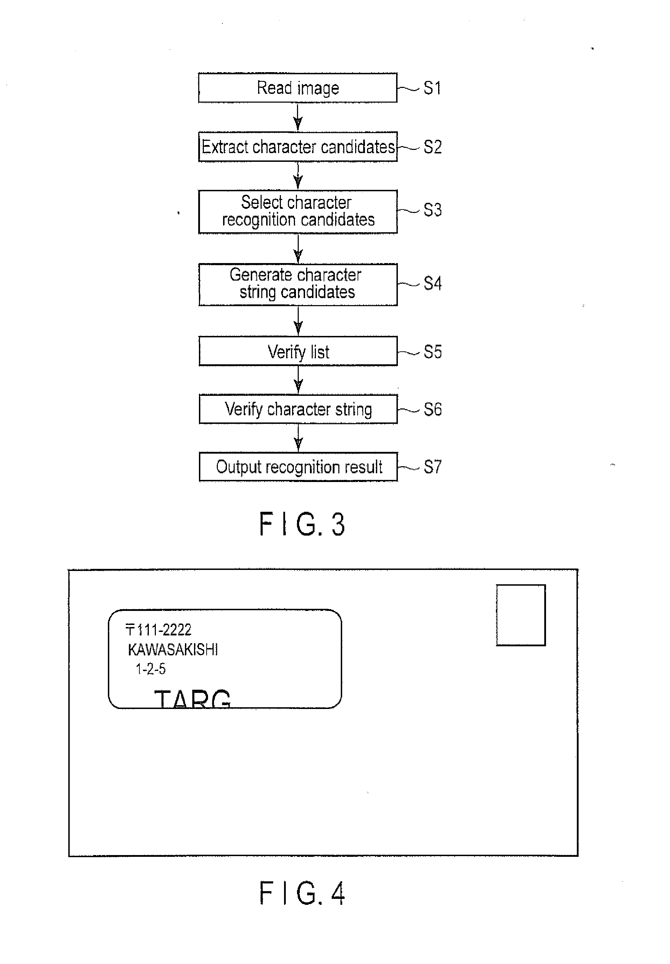

The recognition unit 13 detects each character candidate from an image of the sorted object shown in FIG. 4. For example, the recognition unit 13 detects an image that looks like a character or character string from the image of the sorted object, detects an image that looks like a plurality of characters from the image that looks like a character or character string, and detects a plurality of character candidates from the image that looks like a plurality of characters.

Further, the recognition unit 13 recognizes each character candidate based on the plurality of character recognition dictionaries D1, D2, ..., DN stored in the character recognition dictionary database 14. That is, the recognition unit 13 can recognize the destination address (destination address composed of each character candidate) written on the sorted object.

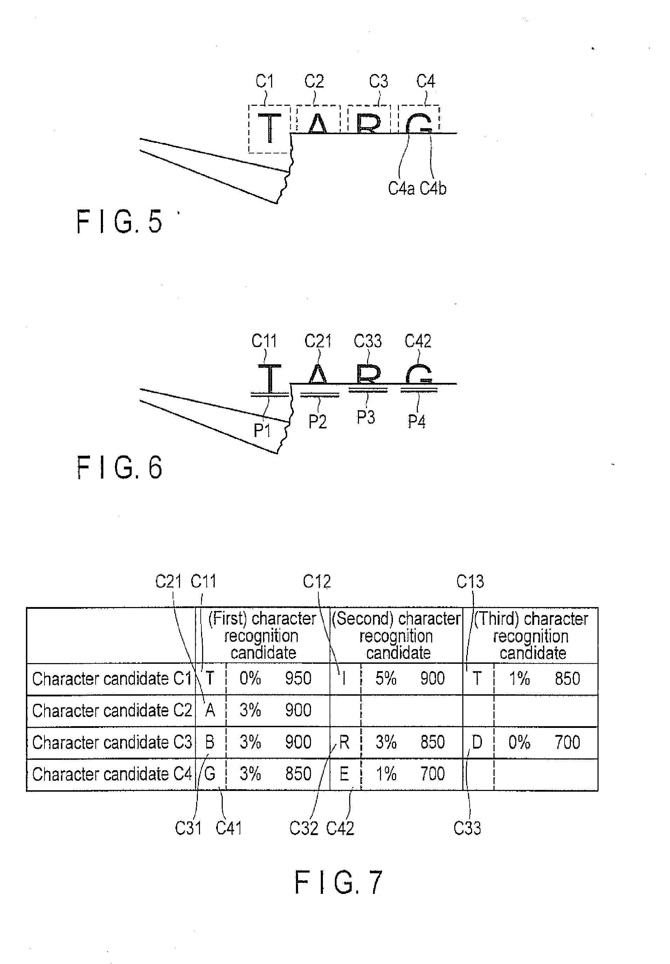

The alignment verification unit 15 verifies whether the lower end (lower side) is aligned in an orderly way when chipping of each character candidate is restored (see FIG. 6). In other words, the alignment verification unit 15 verifies whether the lower end (lower side) is aligned in a straight line along aligned characters when chipping of each character candidate is restored.

The character string verification unit 16 verifies whether a character string is a character string present as character string data (address data) by using character string data (address data) stored in the character string database 17. The character string data (address data) includes character string patterns that may be written on a sorted object.

The sorting unit 18 sorts sorted objects transferred by the transfer unit 11 based on destination address information (sorting information) corresponding to a character recognition result by the recognition unit 13.

Next, an example of character string recognition processing according to the first embodiment will be described with reference to FIG. 3. In the first embodiment, an example of English character string recognition processing will be described.

First, the reading unit 12 reads an image of a sorted object on the transfer path (S1). FIG. 4 is a diagram exemplifying the sorted object according to the first embodiment. As - shown in FIG. 4, the sorted object is, for example, a windowed letter and a portion of the character string "TARG" constituting the destination address is at an end of the window.

Subsequently, the recognition unit 13 extracts each character candidate C1, C2, C3, C4 as shown in FIG. 5 from the image of the sorted object shown in FIG. 4 (S2). A plurality of image regions that look like characters surrounded by rectangles of a broken line shown in FIG. 5 is each character candidate C1, C2, C3, C4.

The recognition unit 13 may extract a plurality of character candidates from one image region that looks like a character. For example, as shown in FIG. 5, the recognition unit 13 can extract a plurality of character candidates C4a, C4b from one image region that looks like a character.

Subsequently, the recognition unit 13 selects one or more character recognition candidates corresponding to each character candidate C1, C2, C3, C4 based on the plurality of character recognition dictionaries D1, D2, ..., DN (S3). The recognition unit 13 selects one or more character recognition candidates satisfying conditions of a predetermined similarity or more for each character candidate. If, for example, a predetermined character candidate perfectly matches the character recognition dictionary DM (1≤M≤N), the predetermined character candidate is assumed to have the similarity 1000 for the character recognition dictionary DM. The recognition unit 13 selects one or more character recognition candidates satisfying conditions of the similarity 700 or more for each character candidate based on the plurality of character recognition dictionaries D1, D2, ..., DN.

For example, as shown in FIG. 7, the recognition unit 13 selects character recognition candidates C11, C12, C13 corresponding to a character candidate C1, a character recognition candidate C21 corresponding to a character candidate C2, character recognition candidates C31, C32, C33 corresponding to a character candidate C3, and character recognition candidates C41, C42 corresponding to a character candidate C4.

That is, the character recognition candidate C11 corresponds to "T" of the similarity 950 (first place) for the character recognition dictionary D1 (dictionary without character chipping), the character recognition candidate C12 corresponds to "I" of the similarity 900 (second place) for the character recognition dictionary D4 (dictionary of 50% character chipping), and the character recognition candidate C13 corresponds to "T" of the similarity 850 (third place) for the character recognition dictionary D2 (dictionary of 10% character chipping).

The character recognition candidate C21 corresponds to "A" of the similarity 900 (first place) for the character recognition dictionary D3 (dictionary of 30% character chipping).

The character recognition candidate C31 corresponds to "B" of the similarity 900 (first place) for the character recognition dictionary D3 (dictionary of 30% character chipping), the character recognition candidate C32 corresponds to "R" of the similarity 850 (second place) for the character recognition dictionary D3 (dictionary of 30% character chipping), and the character recognition candidate C33 corresponds to "D" of the similarity 700 (third place) for the character recognition dictionary D1 (dictionary without character chipping).

The character recognition candidate C41 corresponds to "G" of the similarity 850 (first place) for the character recognition dictionary D3 (dictionary of 30% character chipping) and the character recognition candidate C42 corresponds to "E" of the similarity 700 (second place) for the character recognition dictionary D2 (dictionary of 10% character chipping).

One or more character recognition candidates (character recognition candidates C11, C12, C13) corresponding to the character candidate C1 will be called a first character recognition candidate group G1, one or more character recognition candidates (character recognition candidate C21) corresponding to the character candidate C2 will be called a second character recognition candidate group G2, one or more character recognition candidates (character recognition candidates C31, C32, C33) corresponding to the character candidate C3 will be called a third character recognition candidate group G3, and one or more character recognition candidates (character recognition candidates C41, C42) corresponding to the character candidate C4 will be called a fourth character recognition candidate group G4.

Subsequently, the character string verification unit 16 selects one character recognition candidate from each character recognition candidate group G1, G2, G3, G4 to generate one or more character string candidates (S4).

For example, the character string verification unit 16 selects the character recognition candidate C11 from the first character recognition candidate group G1, the character recognition candidate C21 from the second character recognition candidate group G2, the character recognition candidate C31 from the third character recognition candidate group G3, and the character recognition candidate C41 from the fourth character recognition candidate group G4 to generate a first character string candidate (TABG).

Similarly, the character string verification unit 16 selects the character recognition candidate C12 from the first character recognition candidate group G1, the character recognition candidate C21 from the second character recognition candidate group G2, the character recognition candidate C31 from the third character recognition candidate group G3, and the character recognition candidate C41 from the fourth character recognition candidate group G4 to generate a second character string candidate (IABG).

Similarly, the character string verification unit 16 selects the character recognition candidate C11 from the first character recognition candidate group G1, the character recognition candidate C21 from the second character recognition candidate group G2, the character recognition candidate C32 from the third character recognition candidate group G3, and the character recognition candidate C41 from the fourth character recognition candidate group G4 to generate a third character string candidate (TARG).

Similarly, the character string verification unit 16 selects,the character recognition candidate C12 from the first character recognition candidate group G1, the character recognition candidate C21 from the second character recognition candidate group G2, the character recognition candidate C32 from the third character recognition candidate group G3, and the character recognition candidate C42 from the fourth character recognition candidate group G4 to generate a fourth character string candidate (IARE).

Similarly, the character string verification unit 16 selects the character recognition candidate C13 from the first character recognition candidate group G1, the character recognition candidate C21 from the second character recognition candidate group G2, the character recognition candidate C33 from the third character recognition candidate group G3, and the character recognition candidate C42 from the fourth character recognition candidate group G4 to generate a fifth character string candidate (TADE).

Similarly, the character string verification unit 16 selects the character recognition candidate C13 from the first character recognition candidate group G1, the character recognition candidate C21 from the second character recognition candidate group G2, the character recognition candidate C32 from the third character recognition candidate group G3, and the character recognition candidate C42 from the fourth character recognition candidate group G4 to generate a sixth character string candidate (TARE).

Subsequently, the alignment verification unit 15 verifies whether the lower end (lower side) is aligned in an orderly way when chipping of each character string candidate is restored (S5). For example, the character recognition candidate C11 (T) constituting the fifth character string candidate is selected based on the character recognition dictionary D1 (dictionary without character chipping). Thus, the alignment verification unit 15 estimates that the character recognition candidate C11 has no chipping and estimates, as shown in FIG. 6, a character lower end position P1 of the character recognition candidate C11.

Similarly, the character recognition candidate C21 (A) constituting the fifth character string candidate is selected based on the character recognition dictionary D3 (dictionary of 30% character chipping). Thus, the alignment verification unit 15 estimates that the character recognition candidate C21 has 30% chipping and estimates, as shown in FIG. 6, a character lower end position P2 of the character recognition candidate C21.

Similarly, the character recognition candidate C33 (D) constituting the fifth character string candidate is selected based on the character recognition dictionary D1 (dictionary without character chipping). Thus, the alignment verification unit 15 estimates that the character recognition candidate C33 has no chipping and estimates, as shown in FIG. 6, a character lower end position P3 of the character recognition candidate C33.

Similarly, the character recognition candidate C42 (E) constituting the fifth character string candidate is selected based on the character recognition dictionary D2 (dictionary of 10% character chipping). Thus, the alignment verification unit 15 estimates that the character recognition candidate C42 has 10% chipping and estimates, as shown in FIG. 6, a character lower end position P4 of the character recognition candidate C42.

As shown in FIG. 6, the character lower end position P1 of the character recognition candidate C11, the character lower end position P2 of the character recognition candidate C21, the character lower end position P3 of the character recognition candidate C33, and the character lower end position P4 of the character recognition candidate C42 are not aligned in a straight line in the character string direction. Thus, the alignment verification unit 15 does not judge that the fifth character string candidate is an appropriate character string candidate and rejects the fifth character string candidate. As described above, the alignment verification unit 15 verifies the alignment of each character string candidate and rejects inappropriate character string candidates. In other words, the alignment verification unit 15 verifies a combination of character recognition candidates constituting each character string candidate and rejects inappropriate character string candidates.

Subsequently, the character string verification unit 16 verifies whether each character string candidate not rejected by the alignment verification unit 15 is an appropriate character string based on character string data (address data) stored in the character string database 17 (S6). In other words, the character string verification unit 16 verifies a combination of character recognition candidates constituting each character string candidate based on character string data (address data) stored in the character string database 17 and rejects inappropriate character string candidates. If, for example, the fourth character string candidate (IARE) is not present in character string data, the character string verification unit 16 does not judge that the fourth character string candidate is an appropriate character string candidate and rejects the fourth character string candidate. In this manner, the character string verification unit 16 verifies whether each character string candidate is an appropriate character string and rejects inappropriate character string candidates.

Subsequently, the recognition unit 13 outputs a character string recognition result corresponding to an appropriate character string candidate based on character alignment verification results and character string verification results (S7). That is, the recognition unit 13 outputs a character string recognition result corresponding to an appropriate character string candidate that is not rejected by the character alignment verification by the alignment verification unit 15 and not rejected by the character string verification by the character string verification unit 16. In other words, the recognition unit 13 outputs a character string recognition result corresponding to an appropriate character string candidate based on a verification result of a combination of character recognition candidates constituting each character string candidate by the alignment verification unit 15 and a verification result of a combination of character recognition candidates constituting each character string candidate by the character string verification unit 16.

If the recognition unit 13 selects a plurality of appropriate character string candidates, the recognition unit 13 calculates an average similarity of each character recognition candidate string corresponding to the plurality of selected appropriate character string candidates and outputs a character string recognition result corresponding to a character string candidate having the maximum average similarity (optimal character string candidate). If, for example, the recognition unit 13 selects a first character string candidate and a second character string candidate as appropriate character string candidates, the recognition unit 13 compares the average similarity ((950 + 900 + 900 + 850)/4 = 900) of each character recognition candidate string (C11, C21, C31, C41) corresponding to the first character string candidate and the average similarity ((900 + 900 + 900 + 850)/4 = 887.5) of each character recognition candidate string (C12, C21, C31, C41) corresponding to the second character string candidate and outputs a character string recognition result corresponding to the first character string candidate (optimal character string candidate).

Incidentally, the present invention is not limited to the character string recognition processing described in the first embodiment. For example, the method of selecting the optimal character string candidate from a plurality of appropriate character string candidates is not limited to the method described in the first embodiment.

The first embodiment has been described to the effect that the alignment verification unit 15 rejects inappropriate character string candidates, the character string verification unit 16 further rejects inappropriate character string candidates, and the recognition unit 13 selects the optimal character string candidate from one or more appropriate character string candidates.

However, the optimal character string candidate can also be selected as described below. For example, the optimal character string candidate may also be selected by the recognition unit 13 comprehensively from each character string candidate based on a character alignment evaluation value of each character string candidate provided by the alignment verification unit 15 based on a character alignment verification result and a character string evaluation value of each character string candidate provided by the character string verification unit 16 based on a character string verification result.

The recognition unit 13 may select the optimal character string candidate from each character string candidate based on one of the character alignment verification by the alignment verification unit 15 and the character string verification by the character string verification unit 16. That is, the sorting system may not be configured to require the character alignment verification by the alignment verification unit 15 and the character string verification by the character string verification unit 16.

The recognition unit 13 may also select the optimal character string candidate from each character string candidate based on a total of similarities of each character recognition candidate string corresponding to each character string candidate. Alternatively, the recognition unit 13 may also select the optimal character string candidate from each character string candidate based on at least one of the total of similarities, character alignment verification, and character string verification.

The first embodiment has also been described to the effect that after generation of character string candidates (S4), character alignment verification (S5) and character string verification (S6) are performed. However, character string recognition processing may be performed as described below. For example, character string candidates may be generated so that character alignment verification conditions and character string verification conditions are satisfied.

In the first embodiment, the character string recognition processing in a case when the lower end of characters is hidden has been described. However, character string recognition processing in a case when one or more ends of the upper end, lower end, right end, and left end are hidden can also be realized as described below.

For example, the character recognition dictionary database 14 stores ((N X 4) - 3) (N: natural number) character recognition dictionaries of character recognition dictionaries D1, D21, D22, D23, D24, D31, D32, D33, D34, ..., DN1, DN2, DN3, DN4.

The character recognition dictionary D1 is a character recognition dictionary derived from a plurality of characters without character chipping. The character recognition dictionary D21 (dictionary of 10% character chipping) is a character recognition dictionary derived from a plurality of characters of 1% to 20% character chipping in the upper end. The character recognition dictionary D22 (dictionary of 10% character chipping) is a character recognition dictionary derived from a plurality of characters of 1% to 20% character chipping in the lower end. The character recognition dictionary D23 (dictionary of 10% character chipping) is a character recognition dictionary derived from a plurality of characters of 1% to 20% character chipping in the right end. The character recognition dictionary D24 (dictionary of 10% character chipping) is a character recognition dictionary derived from a plurality of characters of 1% to 20% character chipping in the left end.

The character recognition dictionary D31 (dictionary of 30% character chipping) is a character recognition dictionary derived from a plurality of characters of 21% to 40% character chipping in the upper end. The character recognition dictionary D32 (dictionary of 30% character chipping) is a character recognition dictionary derived from a plurality of characters of 21% to 40% character chipping in the lower end. The character recognition dictionary D33 (dictionary of 30% character chipping) is a character recognition dictionary derived from a plurality of characters of 21% to 40% character chipping in the right end. The character recognition dictionary D34 (dictionary of 30% character chipping) is a character recognition dictionary derived from a plurality of characters of 21% to 40% character chipping in the left end.

The recognition unit 13 selects one or more character recognition candidates corresponding to each character candidate based on the character recognition dictionaries D1, D21, D22, D23, D24, D31, D32, D33, D34, ..., DN1, DN2, DN3, DN4. The alignment verification unit 15 verifies the alignment of each character candidate based on detection results of one or more ends of the upper end, lower end, right end, and left end of each character candidate.

From the foregoing, high-precision character string recognition processing can be realized regardless of which direction of a character is hidden.

The first embodiment has also been described to the effect that the alignment verification unit 15 estimates the degree of chipping of each character candidate, verifies the alignment of character string candidates, and rejects inappropriate character string candidates. The alignment verification unit 15 can further estimate the size of each character candidate along with the degree of chipping of each character candidate and verify the alignment of character string candidates based on these estimation results to reject inappropriate character string candidates.

A sorting system according to the first embodiment can, as described above, recognize a character string with high precision even when the height of characters of a hidden line is different from the height of characters of other lines and also can recognize a character string with high precision even when the degree of chipping caused by characters being hidden is large. A sorting system according to the first embodiment can also recognize a character string with high precision even when the degree of character hiding is different from character to character. Accordingly, a sorting system according to the first embodiment can sort sorted objects with high precision.

According to the above embodiments, a character recognition apparatus and a character recognition method superior in recognition of chipped characters can be provided. Also according to one of the above embodiments, a sorting apparatus and a sorting control apparatus superior in recognition of chipped characters and superior in sorting precision can be provided.

### (Second embodiment)

The second embodiment will be described below with reference to the drawings.

For example, in a windowed mail such as a windowed letter, a character string indication destination address information is positioned at an end of the window and a portion of characters is sometimes hidden and invisible. Reading the destination address information in such a case is a difficult challenge. To solve such a challenge, the technology shown below is publicly known:
(1) Estimate the height of characters of a hidden line by using a line that is not hidden and make a correction when matched against a template. Various reading methods of partially chipped characters in general, not to be limited to the window of a letter, are proposed and technologies shown below, for example, are publicly known:
(2) Estimate the height of characters chipped when an underline is removed from a line that is not underlined and make a correction when matched against a template.
(3) Estimate the height of characters chipped when a ruled line of a form is removed and upper and lower positions and make a correction when matched against a template.
(4) Restoration method of a dot-like defective portion
(5) Restoration method of a portion overlapping with a ruled line in recognition of a form

However, the above methods do not necessarily solve the challenge effectively.

If the height of a hidden line is different from the height of a line that is not hidden, the above method of (1) fails in estimation.

If the height of characters in an underlined line is different from the height of characters in a non-underlined line, the above method of (2) fails in estimation.

The above method of (3) is intended only for characters of a determined size and cannot be applied to an object whose character size is unknown.

The above method of (4) can be applied only if chipping is tiny and cannot be applied when, like hiding by a window, the size of chipping is large.

The above method of (5) can be applied only if chipping is limited to a thin region and cannot be applied when, like hiding by a window, the size of chipping is large.

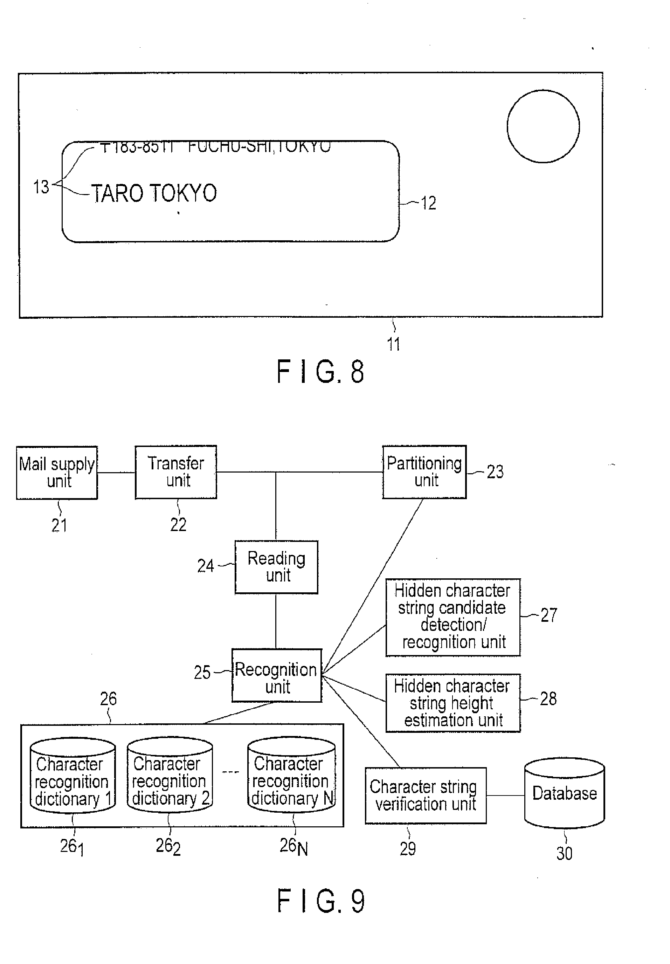

FIG. 8 exemplifies a windowed mail such as a windowed letter that is an object to be processed according to the present embodiment. A windowed mail 11 has a window 12 of cellophane or the like on the front side thereof and destination address information 13 as sorting information is shown (written) inside the window 12 as a character string composed of a plurality of characters. The example in FIG. 8 shows a state in which a portion of the character string indicating the destination address information 13 is hidden at an upper end of the window 12.

FIG. 9 schematically shows the configuration of a sorting apparatus to which a character recognition apparatus and a character recognition method according to the present embodiment are applied.

As shown in FIG. 9, a sorting apparatus according to the present embodiment performs sorting processing of the windowed mail 11 shown in FIG. 8 based on the destination address information 13 and includes a mail supply unit 21, a transfer path 22 as a transfer means, a sorting unit 23 as a sorting means, a reading unit 24 as a reading means, a recognition unit 25 as a recognition means, a dictionary unit 26, a hidden character string candidate detection/check unit 27 as a hidden character string candidate detection/check, a hidden character string height estimation unit 28 as a hidden character string height estimation means, a character string verification unit 29 as a character string verification means, and a database 30.

The mail supply unit 21 supplies mail (for example, the windowed mail 11 shown in FIG. 9) to be processed one mail after another. The transfer path 22 transfers the mail 11 supplied from the mail supply unit 21 one mail after another. The sorting unit 23 performs sorting processing by destination address of the mail 11 transferred through the transfer path 22 based on a recognition result of the recognition unit 25.

The reading unit 24 optically reads an image on the side on which the window 12 of the mail 11 transferred through the transfer path 22 is present on the transfer path 22. The recognition unit 25 recognizes a character string indicating the destination address information 13 from the image read by the reading unit 24.

The dictionary unit 26 is constituted of a plurality of character recognition dictionaries 26₁ to 26_{N}. The character recognition dictionaries 26₁ to 26_{N} are constituted of, for example, one complete character dictionary and defective character dictionaries of each defect ratio (for example, 10%, 20%, 30%, 40%) of characters. The complete character dictionary is assumed to refer to a common character dictionary of character patterns without defects by hiding and the defective character dictionary is assumed to refer to a dictionary of character patterns that are cut (defective) by some tens of percentages at an upper, lower, right, or left end.

The hidden character string candidate detection/check unit 27 detects a character portion that may be hidden to set the character portion as a hidden character string region candidate when a portion of a character string is hidden and checks whether the hidden character string region candidate is an actual hidden character string region. The hidden character string height estimation unit 28 checks whether any character is actually hidden in a hidden character string region detected by the hidden character string candidate detection/check unit 27 and, if the hidden character string region is determined to hide characters, estimates the height of the target character string.

When characters are recognized, the recognition unit 25 detects whether there is any candidate in which the destination address information 13 may be hidden through the hidden character string candidate detection/check unit 27 and estimates the height of a hidden character string portion through the hidden character string height estimation unit 28 to determine individual character recognition scores by using character recognition dictionaries corresponding to a chipping ratio (defect ratio) of a character string.

The character string verification unit 29 performs matching processing to address data in the database 30 by using character recognition scores (character recognition results) obtained from the recognition unit 25 and outputs the result to the sorting unit 23 as the final recognition result.

The present embodiment is characterized in that hidden candidates of a character string are detected and checked and the height of the hidden character string is estimated to know the chipping ratio of characters and therefore, the following two points will be focused on and described in detail below.

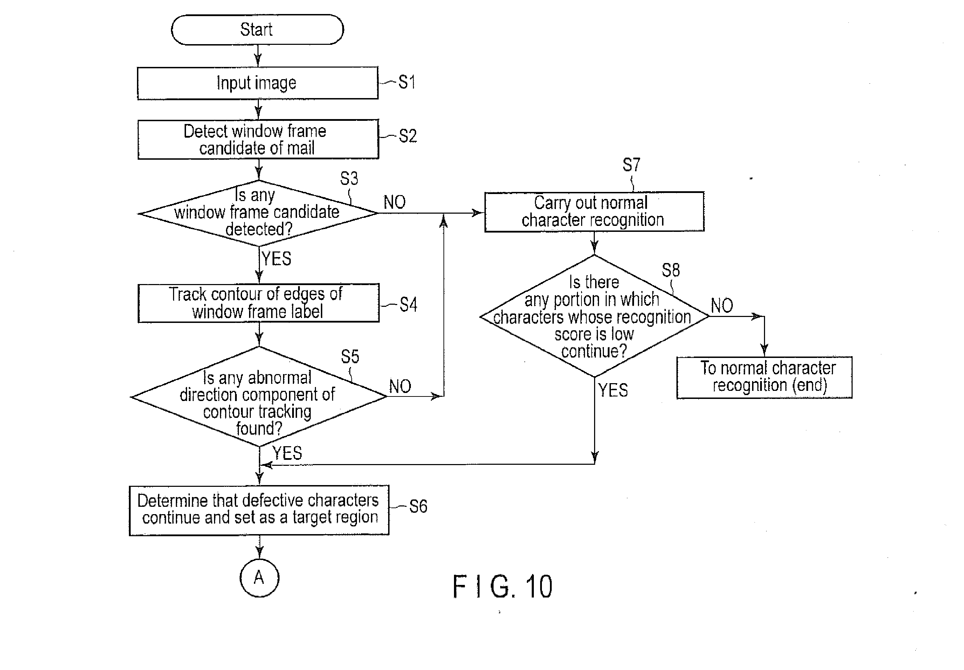

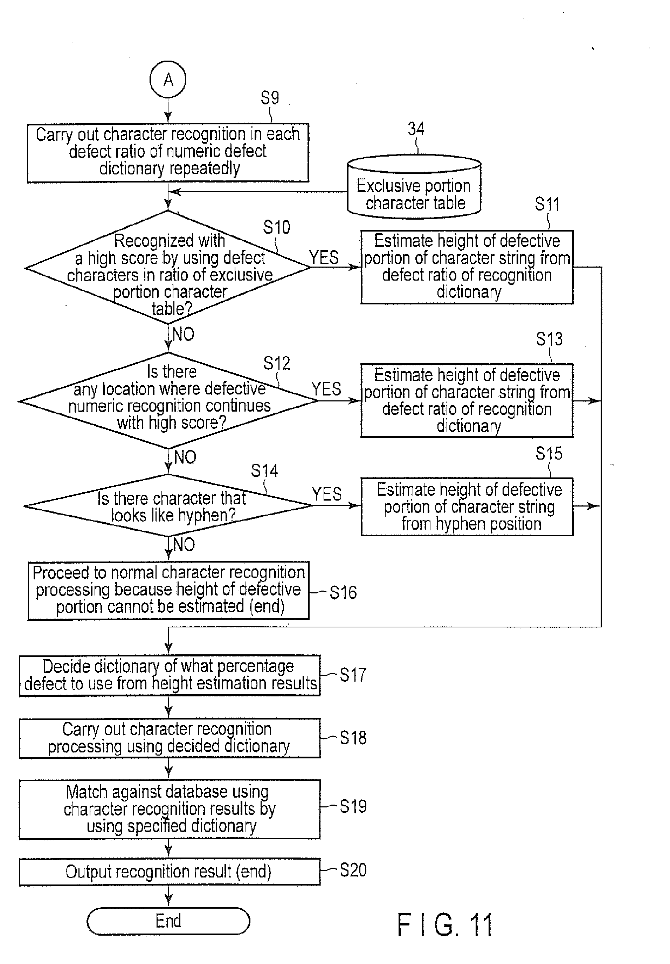

The flow of character recognition processing according to the present embodiment will be described below with reference to the flow chart shown in FIGS. 10 and 11.

When an image of the mail 11 read by the reading unit 24 input (S1), the hidden character string candidate detection/check unit 27 detects candidates (hidden character string region candidates) of the window 13 (window frame) for the input image (S2, S3). Any method may be used as the method of detecting window frame candidates and, for example, the method of finding four lines of a window frame by applying Hough conversion to a differential image or if there is a temperature difference between the surface of the mail 11 and a window frame portion, the method of setting a portion in which a label of an appropriate size is detected from a concentration binary label as a window frame candidate can be used.

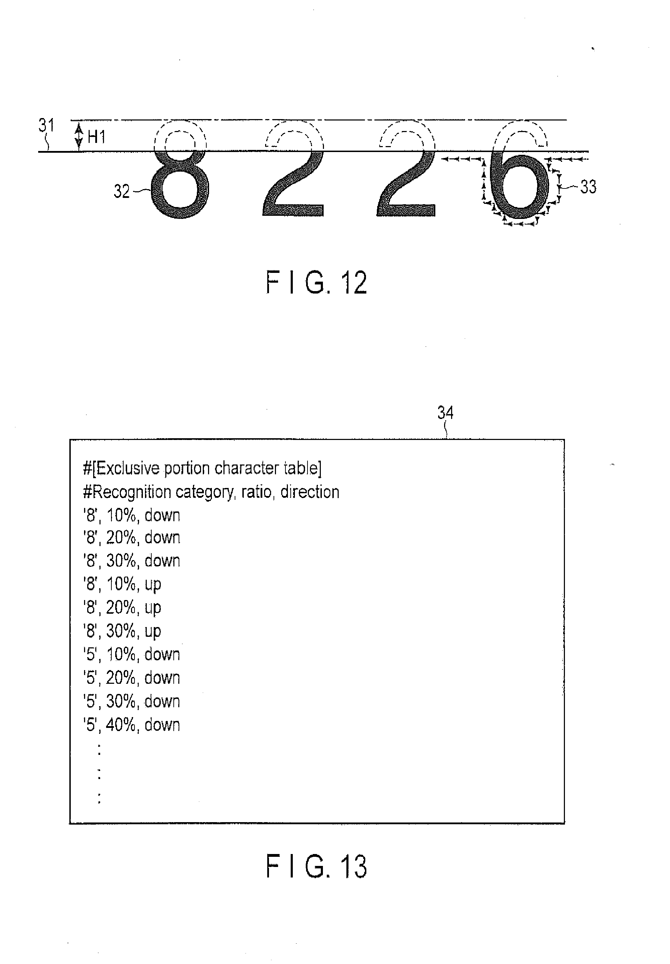

When window frame candidates are detected, the neighborhood of a hidden character string (hereinafter, referred to also as a defective character string) is in a state as shown in FIG. 12. In FIG. 12, reference numeral 31 indicates the upper end of a window frame, reference numeral 32 indicates a defective character string a portion of which is defective (hidden) at the upper end 31 of the window frame, and reference numeral 34 indicates a state of contour tracking.

The contour is tracked at each of the upper, lower, right, and left ends of the window frame (S4) and the same directional component continues at an end where no defective character string is present when each directional component is polled. If, for example, the polling directional component in the right direction is "0", that in the upper direction is "1", that in the left direction is "2", and that in the lower direction is "3" and a search is done along the right direction from inside an edge of the window frame, the polling results in almost the right components,"0", though upper and lower components are a little mixed at the lower end of the window frame. Similarly, the polling results in almost the upper components at the right end and almost the left components at the upper end.

If, as shown in FIG. 12, a defective character string 32 is contained, a direction opposite to the direction that should originally be the main component is a little mixed. Accordingly, the hidden character string candidate detection/check unit 27 determines that the directional component of the contour tracking is abnormal (S5). If determined to be abnormal, the hidden character string candidate detection/check unit 27 determines that the portion has a defective character string continued therein and sets the portion as an actual target region (hidden character string region) (S6).

If no window frame candidate is detected in S2 and S3, or there is no abnormality in directional components of window frame candidates in S5, the hidden character string candidate detection/check unit 27 normal character recognition of the complete character dictionary is carried out on a character string present in the mail 11 (S7). In the present embodiment, the complete character dictionary is, as described above, a normal character dictionary without defective patterns and a defective dictionary refers to a dictionary of character patterns that are cut by some tens of percentages at an upper, lower, right, or left end. Dictionaries of defect ratios cut by, for example, 10% at each of upper, lower, right, and left ends may be provided and such dictionaries may have normalized images if individual character recognition is performed by template matching or may be dictionaries of a feature vector group learned with defective patterns of each category.

If there is any portion where characters with low character recognition scores continue as a result of character recognition by the complete character dictionary in S7 (S8), the hidden character string candidate detection/check unit 27 determines that a defective character string may continue and proceeds to S6 and then sets the region as an actual target region (hidden character string region) by determining that a defective character string continues.

If characters with low character recognition scores do not appear particularly to continue in S8, normal recognition processing of destination address information is performed before the character recognition processing is terminated.

In the present embodiment, it is assumed that a window frame has been detected. If no window frame is detected, edges of the window frame are likely to bed noise of subsequent processing and thus, it is more convenient to erase edge portions of an external frame while leaving only positions.

If a defective character string region is detected in S6, the hidden character string height estimation unit 28 performs height estimation processing of the defective character string described below. A case when numbers are restrictively used as defective character dictionaries will be described in the present embodiment, but other character dictionaries may also be used.

First, in defective character dictionaries of numbers, character recognition is repeated for each defect ratio (S9). Character recognition may be repeated for all candidates of upper, lower, right, and left ends, but as described above, if a defective character string region is detected by a of contour tracking (corresponding to the flow of S5), at which end of the upper, lower, right, and left ends of the window frame to detect abnormality is known and thus, it is enough to repeat character recognition in that direction using defective character dictionaries.

If, even though a defective character string region is detected from a determination that a string of characters with low character recognition scores continues (corresponding to the flow of S8), there is a portion where correct character recognition continues with a character string near the target region, a conjecture can be made that a defective state cannot be present in that direction and thus a conjecture can be made that a defective state occurs on the opposite side of the region where the correct character recognition continues. Accordingly, like when the directional component of contour tracking is used for detection, the direction in which defective character dictionaries are preferentially used can be determined. Character recognition scores in each defect ratio repeated for characters in the defective character region are temporarily held and used for subsequent processing.

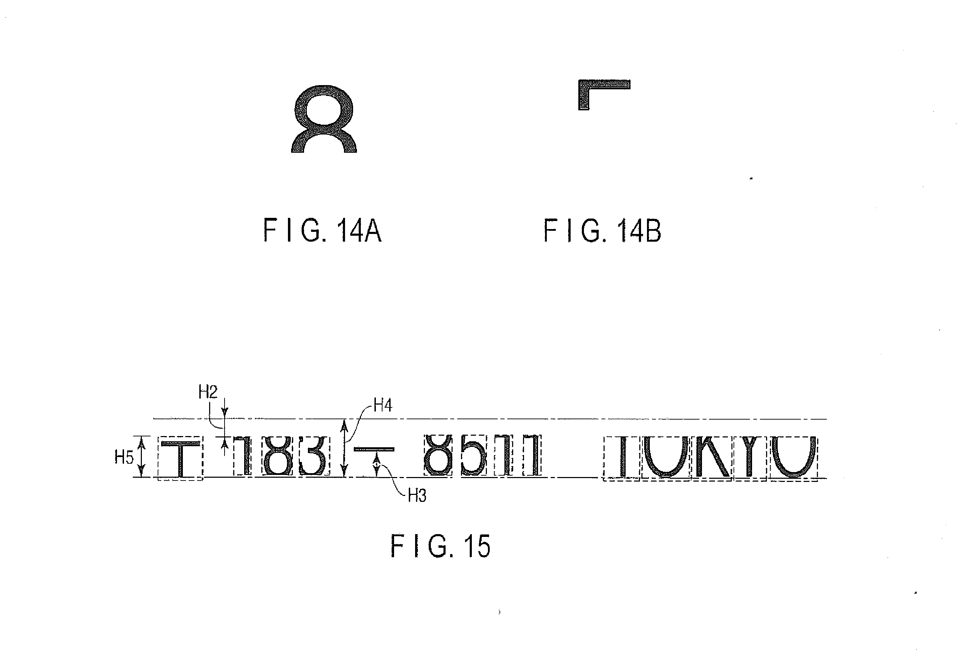

Next, an exclusive partial character table 34 as shown in FIG. 13 is used to make a comparison with registration content thereof. The exclusive partial character table 34 is created in advance before operation and registers impossible defective patterns as non-numeric characters of a target language. If characters used in English are taken as an example, a defective number pattern as shown in FIG. 14A cannot exist as a partial character of English. That is, if FIG. 14A is, for example, a commonly used character of English, the figure cannot be other than a lower 20% defect of the number "8" and thus becomes an exclusive partial character.

In this case, as shown in FIG. 13, by registering "8" of lower defect 20% with the exclusive partial character table 34, 20% hidden "8" can be determined without fail even only by recognition of a number dictionary when "8" of lower defect 20% is actually recognized.

If FIG. 14B is, for example, a commonly used character of English, the figure may be, in addition to being a lower 70% defect of English "E", a lower 70% defect of English "F" and thus does not become an exclusive partial character.

Thus, if a character is recognized in a ratio present in the exclusive partial character table 34 with high scores (S10), a height H1 (see FIG. 12) of a defective portion of a character string can be estimated from the defect ratio of recognition dictionaries (S11). 100% cannot exist in recognition processing and thus, limitations to move to height estimation processing may be imposed to improve accuracy such as requiring at least three characters recognized with high scores.

If the height of a character string defective portion cannot be estimated in S10, whether there is any location where high scores are acquired successively in the same ratio is checked when the above number recognition scores are arranged (S12). Because numbers are frequently consecutive like the zip code and house number, if high scores are successively achieved with a defective character dictionary of the same ratio, the location may be determined to be actually defective.

If high scores are successively achieved in the determination in S12, the height H1 (see FIG. 12) of a defective portion of a character string can be estimated directly from the defect ratio of the recognition dictionary (S13).

If high scores are not successively achieved in the determination in S12, whether there is any character that looks like a hyphen is present in the target character string (S14). If a character that looks like a hyphen can be detected, the height H2 of the defective portion of the character string can be estimated from the height of characters other than the hyphen because, as shown in FIG. 15, the hyphen is commonly placed in the center height of a character (S15).

That is, in the example in FIG. 15, the upper side of a character string is defective and a height H3 from the hyphen to the lower end of the character string can be estimated and the position of double the height H3 can be estimated as a height H4 of the character string. Then, the height H2 of a defective portion can be estimated from the estimated height H4 of the character string and a height H5 of a defective character (H2 = H4 - H5).

The estimated height subtly changes depending on the language or fonts to be recognized and thus, the height may be estimated to suit the occasion. The key point here is that the height of a defective portion becomes detectable by recognizing a hyphen.

Numbers such as the zip code and house number of destination address information and a hyphen are frequently written close to each other and even if the height of a defective portion cannot be estimated in S11 or S13, it becomes possible to estimate the height at a still less error rate by adding a condition that the spatial relationship to a recognition result of hyphen is close. Thus, the height can also be estimated when a hyphen character is detected.

The three kinds of height estimation processing from S10 to S15 may be performed independently, all performed with prioritization, or a combined height estimation value of a defective portion may be taken such as averaging each estimation result.

If no character that looks like a hyphen is detected in the determination in S14, the height of the defective portion of the character string cannot be estimated and thus, normal recognition processing of destination address information is performed before the processing is terminated (S16).

If the height of the defective portion of the character string is estimated in S11, S13, or S15, the recognition unit 25 that has received the height estimation result decides the defective character dictionary of what percentage defects to use from the received height estimation result (S17) and selects the decided defective character dictionary from the dictionary unit 26 to perform character recognition processing on a target character string (S18).

That is, which height of a character string should be optimal for character recognition is determined from a height estimation result and after the height is determined, character recognition is performed by focusing on the character category of the applicable defect ratio. In this case, defective character dictionaries of all character categories may be applied in advance or when template matching is used, the range to be used as a template may be specified for character recognition after the height of a defective portion is known.

Next, the character string verification unit 29 performs matching processing to address data in the database 30 by using a character recognition result with defective character dictionaries specified in S18 (S19) and outputs the result as a final recognition result to the sorting unit 23 (S20).

According to the above embodiment, as described above, the height of a hidden portion of a character string can be found by height estimation processing with high precision and thus, character recognition can be performed effectively even if the height of the hidden character string is different from the height of other character strings, character recognition can be performed effectively even if the degree of chipping of characters by hiding is large, and further character recognition can be performed even if the hiding degree is different from character to character so that accuracy of recognition of character string can significantly be improved. Therefore, labor-saving effects are significantly improved when the above embodiment is applied to labor-saving devices such as mail sorting apparatuses.

In the embodiments, a case when the embodiments are applied to a sorting apparatus that performs sorting processing based on destination address information of a windowed mail has been described, but the embodiments are not limited to such a case and can be applied to, for example, any sorting apparatus that performs sorting processing of objects on which sorting information indicating a sorting destination is marked by a character string based on the sorting information such as securities including bank notes and mails including packages.

According to the embodiments described above, a character recognition apparatus, a character recognition method, and a sorting apparatus capable of performing character recognition effectively even if the height of a hidden character string is different from the height of other character strings, performing character recognition effectively even if the degree of chipping of characters by hiding is large, and further performing character recognition even if the hiding degree is different from character to character can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A character recognition apparatus, comprising:
a detection unit (13) adapted to detect each character candidate from an image; and
a recognition unit (13) adapted to recognize each character candidate based on a plurality of character recognition dictionaries corresponding to a plurality of degrees of different character chipping.

2. The apparatus according to claim 1, **characterized in that** the recognition unit is adapted to select one or more character recognition candidates corresponding to each character candidate based on the plurality of character recognition dictionaries, generate a plurality of character string candidates by combining the character recognition candidates, select the optimal character string candidate based on a verification result of combinations of the character recognition candidates, and to output a recognition result of each character candidate corresponding to the optimal character string candidate.

3. The apparatus according to claim 2, **characterized by** further comprising a first verification unit (16) adapted to verify the combinations of the character recognition candidates based on a character string database storing a plurality of character string patterns, wherein
the recognition unit is adapted to output the optimal character string candidate based on the verification result by the first verification unit.

4. The apparatus according to claim 2, **characterized by** further comprising a second verification unit (15) adapted to estimate a degree of character chipping of each character candidate and to verify the combinations of the character recognition candidates based on the degree of estimated chipping of each character candidate, wherein
the recognition unit is adapted to output the optimal character string candidate based on the verification result by the second verification unit.

5. The apparatus according to claim 4, **characterized in that** the second verification unit is adapted to estimate the degree of chipping of one end of an upper end, a lower end, a right end, and a left end of each character candidate.

6. The apparatus according to claim 1, **characterized in that** the recognition unit is adapted to select one or more character recognition candidates for each character candidate, generate a plurality of character string candidates by combining the character recognition candidates, and to output an optimal character string candidate based on similarities of each of the character recognition candidates.

7. A sorting apparatus, comprising the apparatus according to any of claims 1 to 6 and further comprising a sorting unit (18) adapted to sort sorted objects based on a recognition result of each character candidate.

8. A sorting control apparatus, comprising the apparatus according to any of claims 1 to 6 and further comprising a communication unit (1C) adapted to receive an image sent from a sorting processing unit and to send sorting information corresponding to a recognition result of each character candidate to the sorting processing unit, the sorting processing unit being adapted to read the image from a sorted object and to sort the sorted object based on the sorting information.

9. A character recognition method, comprising:
detecting each character candidate from an image; and
recognizing each character candidate based on a plurality of character recognition dictionaries corresponding to a plurality of degrees of different character chipping.

10. A character recognition apparatus for recognizing a character string in which a plurality of characters is arranged like a row, comprising:
a hidden character string candidate detection unit (27) adapted to detect a character portion that may be hidden under circumstances in which a portion of the character string is hidden and to set the character portion as a hidden character string region candidate;
a checking unit (27) adapted to check whether any character is actually hidden by the hidden character string region candidate detected by the hidden character string candidate detection unit; and
a recognition unit (25) adapted to perform recognition processing of the target character string based on a recognition result by the checking unit.

11. The apparatus according to claim 10, **characterized by** further comprising:
a hidden character string candidate checking unit (27) adapted to track a contour of the hidden character string region candidate detected by the hidden character string candidate detection unit to check whether the detected hidden character string region candidate is an actual hidden character string region by checking variations of a directional component of contour tracking.

12. The apparatus according to claim 10, **characterized by** further comprising:
a hidden character string height estimation unit (28) adapted to estimate a height of the target character string when the checking unit determines that characters are hidden, wherein
the recognition unit is adapted to perform recognition processing of the character string based on the height of the character string estimated by the hidden character string height estimation unit.

13. The apparatus according to claim 12, **characterized in that** the hidden character string height estimation unit is adapted to perform character recognition of the target character string using hidden partial character recognition dictionaries and to estimate the height of a hidden portion of the character string if recognition results of high scores are successively obtained.

14. The apparatus according to claim 13, **characterized in that** the hidden character string height estimation unit is adapted to mark partial characters that cannot exist in other characters of a target language in advance for a character recognition result using the hidden partial character recognition dictionaries to use the partial characters as a key for hidden height estimation of the character string.

15. The apparatus according to claim 12, **characterized in that** the hidden character string height estimation unit is adapted to estimate the height of a hidden portion of the character string by detecting a hyphen in the character string.

16. A character recognition method of recognizing a character string in which a plurality of characters is arranged like a row, comprising:
detecting a character portion that may be hidden under circumstances in which a portion of the character string is hidden and setting the character portion as a hidden character string region candidate;
checking whether any character is actually hidden by the detected hidden character string region candidate; and
performing recognition processing of the target character string based on a recognition result.

17. A sorting apparatus for sorting an object on which sorting information indicating a sorting destination by a character string is marked based on the sorting information, comprising:
a transfer unit (22) adapted to transfer the object;
a reading unit (24) adapted to read an image of the object transferred by the transfer unit;
a character recognition apparatus (25, 27) according to any of claims 10 to 15 adapted to recognize the character string indicating the sorting information from an image read by the reading unit; and
a sorting unit (23) adapted to sort the object based on the character string as the sorting information recognized by the character recognition unit.

18. The apparatus according to claim 17, **characterized in that** the object is a windowed mail and a mail in which a portion of the character string indicating the sorting information is hidden by the window.
